Europäisches Patentamt

European Patent Office

Office européen des brevets

(19)

(11) Numéro de publication: **0 235 006**
**B1**

(12) FASCICULE DE BREVET EUROPEEN

(45) Date de publication du fascicule du brevet: **31.10.90**

(51) Int. Cl.⁵: **H 02 B 13/02**

(21) Numéro de dépôt: **87400224.9**

(22) Date de dépôt: **02.02.87**

(54) Poste blindé subdivisé en compartiments étanches.

(30) Priorité: **14.02.86 FR 8602130**

(43) Date de publication de la demande:
**02.09.87 Bulletin 87/36**

(45) Mention de la délivrance du brevet:
**31.10.90 Bulletin 90/44**

(84) Etats contractants désignés:
**AT BE CH DE GB IT LI SE**

(56) Documents cités:
**EP-A-0 152 611**

(73) Titulaire: **MERLIN GERIN**
**Rue Henri Tarze**
**F-38050 Grenoble Cédex (FR)**

(72) Inventeur: **Diaferia, Aldo**
**Merlin Gerin**
**F-38050 Grenoble Cedex (FR)**
Inventeur: **Messie, Michel**
**Merlin Gerin**
**F-38050 Grenoble Cedex (FR)**

(74) Mandataire: **Kern, Paul et al**
**Merlin Gerin Sce. Brevets 20, rue Henri Tarze**
**F-38050 Grenoble Cédex (FR)**

# Description

L'invention est relative à une installation électrique, notamment un poste blindé à haute tension, ayant une enveloppe métallique remplie d'un gaz à rigidité diélectrique élevée subdivisée en différents compartiments par des cloisons isolantes étanches, notamment un compartiment disjoncteur, dans lequel est logé un disjoncteur électrique, un compartiment jeu de barres contenant au moins une barre conductrice d'alimentation électrique et un compartiment sectionneur, intercalé entre le compartiment jeu de barres et le compartiment disjoncteur et contenant un sectionneur de connexion électrique du disjoncteur à ladite barre en position fermée du sectionneur et d'isolement électrique du disjoncteur de ladite barre en position ouvert du sectionneur. (Voir le document EP—A—0152611).

Un poste blindé de genre mentionné est constitué par l'assemblage d'éléments standard, tels que des sectionneurs des jeux de barres et des disjoncteurs chaque élément étant logé dans un compartiment étanche. Le cloisonnement limite le risque de propagation d'un incident d'un compartiment vers l'autre et facilite les opérations de maintenance ou de réparations, seule la partie affectée par le défaut étant mise à l'atmosphère et démontée. La disposition de chaque élément dans un compartiment individuel nécessite un volume important et est relativement couteuse. Il a déjà été proposé d'intégrer dans un meme compartiment plusieurs fonctions mais cette simplification se fait au détriment des facilités d'intervention sur le poste. Lors de l'échange d'un isolateur entre deux travées dans le jeu de barres, les deux travées adjacentes doivent etre mises hors tension.

La présente invention a pour but de permettre la réalisation d'un poste blindé simplifié à encombrement réduit permettant de conserver les possibilités d'intervention sur une partie du poste, l'autre partie restant sous tension.

L'installation électrique selon l'invention est caractérisée en ce que le mécanisme du sectionneur est logé dans le compartiment jeu de barres et est relié au contact mobile du sectionneur, logé dans le compartiment sectionneur, par une liaison mécanique traversant d'une manière étanche la cloison de séparation du compartiment jeu de barres et du compartiment sectionneur.

En disposant le mécanisme du sectionneur dans le compartiment jeu de barres, il est possible de réduire notablement le volume du compartiment sectionneur dont la longueur se résume pratiquement à l'intervalle d'isolation entre les contacts ouverts en position de sectionnement. Un jeu de barres peut être isolé de la travée par ouverture du sectionneur et maintien de la pression de gaz isolant dans le compartiment sectionneur. Lorsque ces deux conditions sont remplies la partie restante de la travée peut être démontée et plus particulièrement être mise à l'atmosphère, le jeu de barres isolé restant sous tension pour l'alimentation des autres travées du poste. Cette disposition est particulièrement avantageuse pour un poste à double jeu de barres qui permet l'alimentation par le jeu de barre intact des parties restantes du poste non affecté par l'intervention ou la réparation. Le sectionneur est avantageusement du type à broche coulissante montée sur une tige isolante de commande traversant l'isolateur de cloisonnement intercalé entre le compartiment jeu de barres et le compartiment sectionneur. L'invention est applicable à un poste à enveloppe monophasé ou triphasé, la solution triphasé présentant l'avantage d'un encombrement réduit.

Chaque travee du poste comporte bien entendu les éléments appropriés, tels que les transformateurs de courant et de potentiel et les sectionneurs de mise à la terre assurant la sécurité lors d'une intervention.

D'autres avantages et caractéristiques ressortiront plus clairement de la description qui va suivre d'un mode de mise en oeuvre de l'invention, donné à titre d'exemple non limitatif et représenté aux dessins annexés dans lesquels:

—la figure 1 est une vue schématique d'une travée d'un poste blindé selon l'invention, la partie sectionneur étant représentée schématiquement en coupe;

—la figure 2 est le schéma électrique de la travée illustrée à la figure 1;

—la figure 3 est une vue à échelle agrandie du sectionneur de la travée selon la figure 1;

—la figure 4 est une vue en plan de la figure 3, l'enveloppe étant supposée enlevée.

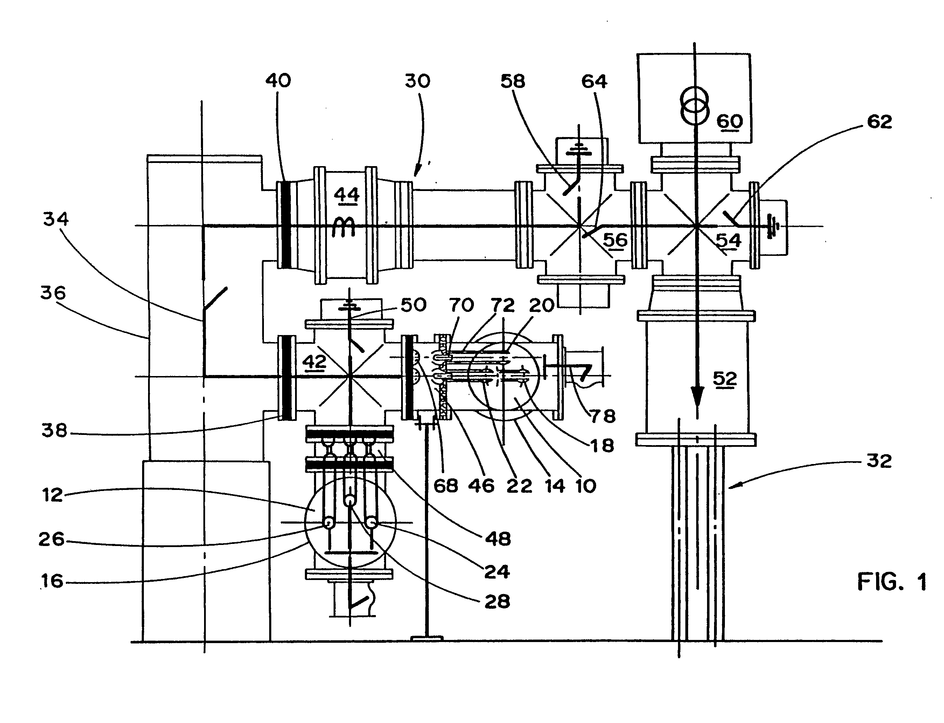

Sur les figures un poste blindé de distribution électrique haute tension comporte deux jeux de barres 10, 12, s'étendant suivant une direction perpendiculaire au plan de la figure 1. Chaque jeu de barres 10, 12, comporte une enveloppe métallique mise à la terre 14, 16, de forme cylindrique entourant 3 barres conductrices 18, 20, 22, 24, 26, 28, d'alimentation triphasée. Le long des barres 10, 12, sont échelonnées des travées 30, dont seule l'une est représentée à la figure 1, chacune associée à un départ 32. La travée illustrée à la figure 1 comporte un disjoncteur tripolaire 34, logé dans une enveloppe cylindrique 36 ayant deux embouts de raccordement respectivement à un compartiment de raccordement 42 et un compartiment de mesure de courant 44. Au compartiment 42 sont raccordés les jeux de barres 10, 12, respectivement par l'intermédiaire de compartiments de sectionnement 46, 48, décrits ci-dessous en détail. Dans le compartiment 42 est logé un sectionneur de mise à la terre 50. Les câbles de départ 32 sont raccordés au compartiment de mesure de courant 44 par l'intermédiaire d'une boite à câbles 52 d'un compartiment de mise à la terre 54 et d'un compartiment de sectionnement 56. Ce dernier compartiment 56 comporte également un sectionneur de mise à la terre 58 et un compartiment de mesure de potentiel 60 est raccordé au compartiment de mise à la terre 54. Chaque compartiment comporte une enveloppe métallique cylindrique pourvue de brides ou d'embouts de raccordement aux compartiments adjacents. A l'intérieur du compartiment sont disposés les éléments correspondants, notamment trois transformateurs de potentiel dans le compartiment 60 de mesure, un sectionneur triphasé 62 de mise à la terre dans le compartiment 54 et un sectionneur de lignes triphasés 64 dans le compartiment 56 de sectionnement. Les compartiments sont étanches et remplis d'héxafluorure de soufre sous pression, le cloisonnement entre les compartiments étant assuré par des isolateurs support 66 intercalés entre les brides de raccordement des enveloppes correspondantes. Les isolateurs support 66 sont traversés par les conducteurs électriques de liaison des éléments contenus dans les compartiments.

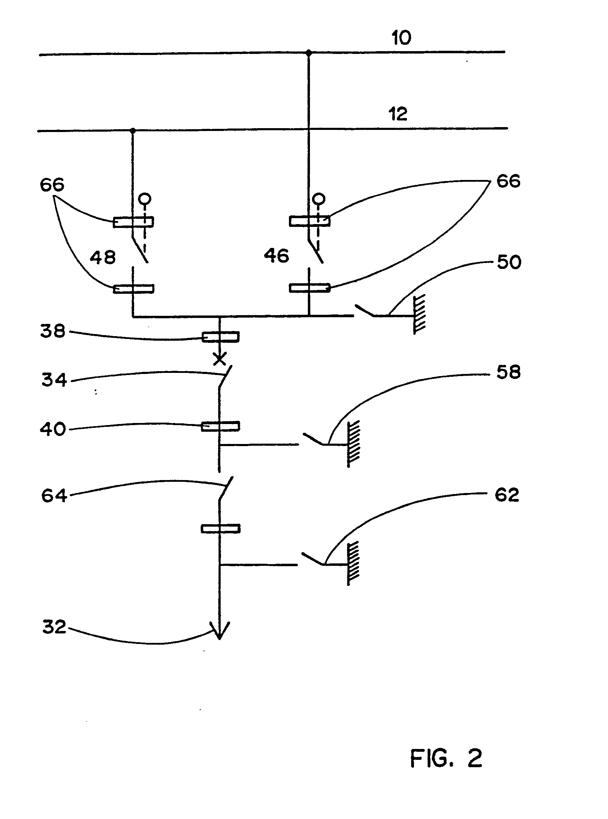

Un tel poste est bien connu des spécialistes et il est inutile de le décrire plus en détail. Il suffit de rappeler que la fermeture de l'un des sectionneurs 46 ou 48 permet d'alimenter la travée respectivement par le jeu de barres 10 ou 12, le disjoncteur 34 assurant la protection du départ 32. Lors d'une défaillance ou de mise hors tension pour réparation de l'un des jeux de barres 10, 12, la travée peut être alimentée par l'autre jeu de barres maintenant la continuité du service. Ce mode de fonctionnement ressort clairement du schéma électrique de la travée représentée à la figure 2.

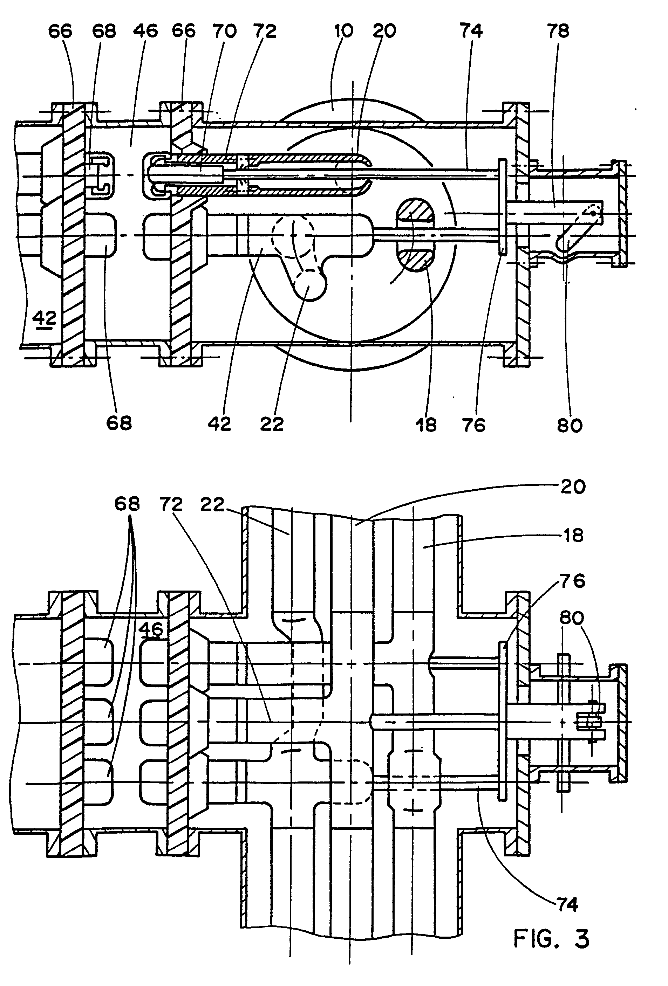

En se référant plus particulièrement aux figures 3 et 4 qui représentent le compartiment jeu de barres 10 et le compartiment sectionneur associé 46, on voit que l'isolateur support 66 de séparation des compartiments sectionneur 46 et de raccordement 42, portent trois contacts fixes 68, du sectionneur. En regard de chaque contact fixe 68 est disposée une broche 70, constituant le contact mobile du sectionneur, chaque broche 70 étant montée à coulissement dans un fourreau cylindrique 72 qui traverse d'une manière étanche l'isolateur support 66 de séparation du compartiment jeu de barres et du compartiment sectionneur 46.

Les trois fourreaux 72 sont chacun respectivement raccordés à l'une des barres 18, 20, 22, du jeu de barres 10. Chaque broche de contact mobile 70 est fixée à une tige de commande 74, montée à coulissement dans le fourreau 72 et faisant saillie de l'extrémité de ce fourreau opposée à celle de la broche de contact 70. Les trois tiges isolantes 74 sont solidarisées par un palonnier 76 relié par une biellette 78 à une manivelle de commande 80 dont l'arbre traverse l'enveloppe du compartiment jeu de barres 10. En position ouvert du sectionneur, les broches de contact 70 sont rétractées dans les fourreaux 72 et une commande de fermeture du sectionneur est réalisée par pivotement de la manivelle 80 dans le sens inverse des aiguilles d'une montre sur la figure 3, qui provoque un coulissement de l'ensemble palonnier 76, tige isolante 74 et broches 70 en direction des contacts fixes 68 du sectionneur. Il est facile de voir que la zone de sectionnement du sectionneur est confinée dans le compartiment sectionneur 46, tandis que la commande du sectionneur, en l'occurrence les tiges isolantes 74, le palonnier 76 et la manivelle 80 sont disposés dans le compartiment jeu de barres 10.

Lors d'une intervention sur l'une des travées de l'installation, par exemple la travée illustrée à la figure 1, cette dernière est isolée des jeux de barres 10, 12, par ouverture des deux sectionneurs. La travée étant isolée électriquement, il est possible de mettre à l'atmosphère l'ensemble des compartiments ou le compartiment dans lequel l'intervention doit être effectuée par exemple le compartiment 42. Cette mise à l'atmosphère est possible, même lorsque l'un ou les deux jeux de barres 10, 12, sont maintenus sous tension pour l'alimentation des autres travées du poste, l'isolation étant assurée par ouverture du sectionneur dont les contacts 68, 70, sont disposés dans un compartiment 46, rempli d'hexafluorure de soufre sous pression. Si l'intervention s'étend à l'un des jeux de barres, ce dernier doit bien entendu être mis hors tension avant l'ouverture du compartiment sectionneur correspondant, l'alimentation de la partie restante de l'installation étant réalisée par l'autre jeu de barres. L'intégration du mécanisme du sectionneur dans le compartiment de jeu de barres autorise une réduction notable du volume du compartiment sectionneur 46, 48, et de ce fait de l'encombrement total du poste tout en conservant les possibilités de démontage et d'intervention sans interruption de l'alimentation de l'ensemble de l'installation.

L'invention a été décrite comme étant appliquée à un poste triphasé, mais il est clair qu'elle est applicable à des postes mixtes, par exemple à jeu de barres triphasé logé dans une enveloppe unique, tandis que les autres éléments, notamment les disjoncteurs sont à enveloppe individuelle pour chaque phase. L'invention est également applicable à des postes à phase séparée, chaque phase ayant sa propre enveloppe mise à la terre. L'architecture du poste peut être différente, notamment la disposition du disjoncteur, l'alimentation par un ou deux jeux de barres ainsi que le mode de commande des sectionneurs.

**Revendications**

1. Installation électrique blindée, notamment poste blindé à haute tension, ayant une enveloppe métallique remplie d'un gaz à rigidité diélectrique élevée, subdivisée en différents compartiments par des cloisons (66) isolantes étanches, notamment un compartiment disjoncteur (36), dans lequel est logé un disjoncteur électrique (34), un compartiment jeu de barres (10, 12) contenant au moins une barre conductrice (18, 28) d'alimentation électrique et un compartiment sectionneur (46, 48), intercalé entre le compartiment jeu de barres (10, 12) et le compartiment disjoncteur (36) et contenant un sectionneur de connexion électrique du disjoncteur à ladite barre en position fermée du sectionneur et d'isolement électrique du disjoncteur de ladite barre en position ouvert du sectionneur, caractérisée en ce que le mécanisme du sectionneur est logé dans le compartiment jeu de barres (10, 12) et est relié au contact mobile (70) du sectionneur, logé dans le compartiment sectionneur (46, 48) par une liaison mécanique traversant d'une manière étanche la cloison (66) de séparation du compartiment jeu de barres (10, 12) et du compartiment sectionneur (46, 48).

2. Installation selon la revendication 1, caractérisée en ce qu'un même compartiment jeu de barres (10, 12) est commun à plusieurs travées successives de l'installation.

3. Installation selon la revendication 1 ou 2, ayant deux jeux de barres (10, 12) et deux sectionneurs, un premier sectionneur de connexion du disjoncteur (36) au premier jeu de barres (10) et un deuxième sectionneur de connexion du disjoncteur (36) au deuxième jeu de barres (12), caractérisée en ce que chaque sectionneur comporte une zone de sectionnement (46, 48), constituée par le contact fixe (68) et le contact mobile (70) du sectionneur, logés dans un compartiment sectionneur (46, 48) séparé par des cloisons isolantes étanches (66) du compartiment disjoncteur (36) et du compartiment jeu de barres associé (10, 12).

4. Installation selon l'une des revendications précédentes, caractérisée en ce que le sectionneur comporte une broche (70) de contact mobile, montée à coulissement dans le compartiment sectionneur et une tige isolante (74) de commande de ladite broche qui s'étend dans le compartiment jeu de barres (10, 12) et est reliée à une bielle d'actionnement (78).

5. Installation selon la revendication 4, caractérisée en ce que la tige isolante (74) de commande est montée à coulissement dans un conducteur tubulaire (72) de dérivation raccordé à la barre associée du jeu de barres, ladite tige étant mobile suivant une direction perpendiculaire à la direction longitudinale du jeu de barres.

6. Installation selon l'une des revendications précédentes, caractérisée en ce que le jeu de barres et le sectionneur sont du type triphasé, les trois phases étant logées dans le même compartiment.

7. Installation selon l'une des revendications précédentes, comprenant des enveloppes métalliques cylindriques, caractérisée en ce que l'enveloppe du compartiment sectionneur s'étend perpendiculairement à l'enveloppe du compartiment jeu de barres (10, 12) à laquelle elle se raccorde, le mécanisme (74, 80) du sectionneur s'étendant dans une partie du compartiment jeu de barres disposée dans le prolongement de l'enveloppe du compartiment sectionneur.

8. Installation selon l'une des revendications précédentes, caractérisée en ce que les cloisons (66) de séparation des compartiments sont constituées par des isolateurs support intercalés entre les brides de raccordement des enveloppes desdits compartiments.

**Patentansprüche**

1. Metallgekapselte elektrische Vorrichtung, insbesondere metallgekapselte Hochspannungs-Schaltanlage mit einem Metallgehäuse, das mit Gas von hoher dielektrischer Festigkeit gefüllt ist, unterteilt in verschiedene Teilabschnitte durch gasdichte Isolierwände (66), insbesondere ein Leistungsschalterabschnitt (36), in dem ein elektrischer Leistungsschalter (34) untergebracht ist, einen Sammelschienenabschnitt (10, 12), der mindestens eine Leitschiene (18, 28) zur elektrischen Stromversorgung enthält, und ein Trennschalterabschnitt (46, 48), der zwischen dem Sammelschienenabschnitt (10, 12) und dem Leistungsschalterabschnitt (36) eingefügt ist, und der einen Trennschalter enthält zur elektrischen Verbindung des Leistungsschalters mit der genannten Schiene in geschlossener Lage des Trennschalters und zur elektrischen Isolierung des Leistungsschalters von der genannten Schiene in geöffneter Lage des Trennschalters, dadurch gekennzeichnet, dass der Trennschalter-Mechanismus in dem Sammelschienenabschnitt (10, 12) untergebracht ist und mit dem beweglichen Kontakt (70) des Trennschalters verbunden ist, der in dem Trennschalterabschnitt (46, 48) angeordnet ist, durch eine mechanische Verbindung, die gasdicht die Trennwände (66) des Sammelschienenabschnitts (10, 12) und des Trennschalterabschnitts (46, 48) durchquert.

2. Vorrichtung nach Anspruch 1, dadurch gekennzeichnet, dass derselbe Sammelschienenabschnitt (10, 12) mehreren aufeinanderfolgenden Schaltfeldern der Vorrichtung gemein ist.

3. Vorrichtung nach Anspruch 1 oder 2, mit zwei Sammelschienen (10, 12) und zwei Trennschaltern, ein erster Trennschalter zur Verbindung des Leistungsschalters (36) mit der ersten Sammelschiene (10) und ein zweiter Trennschalter zur Verbindung des Leistungsschalters (36) mit der zweiten Sammelschiene (12), dadurch gekennzeichnet, dass jeder Trennschalter einen Trennbereich (46, 48) aufweist, der von dem festen Kontakt (68) und dem beweglichen Kontakt (70) des Trennschalters gebildet wird, welche in dem Trennschalterabschnitt (46, 48) angeordnet sind, der von dem zugeordneten Sammelschienenabschnitt (10, 12) durch gasdichte Isolierwände (66) getrennt wird.

4. Vorrichtung nach einem der vorhergehenden Ansprüche, dadurch gekennzeichnet, dass der Trennschalter einen beweglichen Kontaktstift (70) aufweist, der gleitbar in dem Trennschalterabschnitt montiert ist, sowie eine Isolier-Steuerstange (74) des genannten Stiftes, die sich in dem Sammelschienenabschnitt (10, 12) erstreckt und mit einer Antriebsstange (78) verbunden ist.

5. Vorrichtung nach Anspruch 4, dadurch gekennzeichnet, dass die Isolier-Steuerstange (74) gleitbar in einem rohrförmigen Abzweigungsleiter (72) montiert ist, der mit der zugeordneten Schiene der Sammelschienen verbunden ist, wobei die Stange beweglich ist gemäss einer Richtung senkrecht zu der Längsrichtung der Sammelschienen.

6. Vorrichtung nach einem der vorhergehenden Ansprüche, dadurch gekennzeichnet, dass die Sammelschienen und der Trennschalter vom Dreiphasen-Typ sind, wobei die drei Phasen in demselben Teilabschnitt untergebracht sind.

7. Vorrichtung nach einem der vorhergehenden Ansprüche, mit zylindrischen, metallischen Gehäusen, dadurch gekennzeichnet, dass sich das Gehäuse des Trennschalterabschnitts senkrecht zu dem Gehäuse des Sammelschienenabschnitts (10, 12) erstreckt und sich mit ihm verbindet, wobei sich der Mechanismus (74, 80) des Trennschalters in einem Teil des Sammelschienenabschnitts erstreckt, der in der Verlängerung des Trennschalterabschnitt-Gehäuses angeordnet ist.

8. Vorrichtung nach einem der vorhergehenden Ansprüche, dadurch gekennzeichnet, dass die Trennwände (66) der Teilabschnitte von Tragisolatoren gebildet werden, die zwischen die Anschlussflansche der Gehäuse der genannten Teilabschnitte eingefügt sind.

**Claims**

1. Metalclad electrical installation, notably a metalclad high-voltage substation, with a metal enclosure filled with a high dielectric strength gas, subdivided into different compartments by tight insulating partitions (66), notably a circuit breaker compartment (36) in which is housed an electric circuit breaker (34), a busbar compartment (10, 12) containing at least one conducting bar (18, 28) for the electric supply, and an isolating switch compartment (46, 48), located between the busbar compartment (10, 12) and the circuit breaker compartment (36) and containing an isolating switch for the electrical connection of the circuit breaker to said bar in the closed position of the isolating switch and for the electrical isolation of the circuit breaker from said bar in the open position of the isolating switch, characterized in that the isolating switch mechanism is housed in the busbar compartment (10, 12) and is connected to the movable contact (70) of the isolating switch, housed in the isolating switch compartment (46, 48) by a mechanical link passing tightly through the partition (66) separating the busbar compartment (10, 12) and the isolating switch compartment (46, 48).

2. Installation according to claim 1, characterized in that the same busbar compartment (10, 12) is common to several successive bays of the installation.

3. Installation according to claim 1 or 2, having two busbars (10, 12) and two isolating switches, a first isolating switch connecting the circuit breaker (36) to the first busbar (10) and a second isolating switch connecting the circuit breaker (36) to the second busbar (12), characterized in that each isolating switch comprises an isolating switching zone (46, 48) constituted by the stationary contact (68) and the movable contact (70) of the isolating switch, housed in an isolating switch compartment (46, 48) separated by tight insulating partitions (66) from the circuit breaker compartment (36) and from the associated busbar compartment (10, 12).

4. Installation according to one of the preceding claims, characterized in that the isolating switch comprises a movable contact pin (70), mounted with sliding in the isolating switch compartment and an insulating operating rod (74) of said pin which extends into the busbar compartment (10, 12) and is connected to an operating rod (78).

5. Installation according to claim 4, characterized in that the insulating operating rod (74) is mounted with sliding in a tubular branching conductor (72) connected to the associated bar of the busbar, said rod being movable mounted in a direction perpendicular to the longitudinal direction of the busbar.

6. Installation according to one of the preceding claims, characterized in that the busbar and the isolating switch are of the three-phase type, the three phases being housed in the same compartment.

7. Installation according to one of the preceding claims, comprising cylindrical metal enclosures, characterized in that the isolating switch compartment enclosure extends perpendicular to the enclosure of the busbar compartment (10, 12) to which it is connected, the isolating switch mechanism (74, 80) extending in a part of the busbar compartment located in the extension of the isolating switch compartment enclosure.

8. Installation according to one of the preceding claims, characterized in that the partitions (66) separating the compartments are constituted by support insulators between the connection flanges of the enclosures of said compartments.

FIG. 1

FIG. 2

FIG. 3